# EUROPEAN PATENT APPLICATION

(11) **EP 4 742 819 A1**
(43) Date of publication of application: **13.05.2026**
(21) Application number: 24211799.2
(22) Date of filing: 08.11.2024
(51) Int. Cl.: H04W 76/15

(54) **TERMINAL DEVICE AND METHOD FOR MEASUREMENT EVALUATION IN WIRELESS COMMUNICATION SYSTEMS**

(71) Applicant: Nokia Technologies Oy, 02610 Espoo (FI)
(72) Inventor: MANALASTAS, Marvin, Tulsa, OK (US); DALSGAARD, Lars, Oulu (FI); KAINULAINEN, Jani-Pekka, Cottenham, Cambridgeshire (GB); LEE, Gilsoo, Naperville (US); KARIMIDEHKORDI, Ali, Munich (DE)
(74) Representative: Nokia EPO representatives

(57) **Abstract**

A terminal device performs measurements related to a first base station while in a radio resource control (RRC) idle state or RRC inactive state. The terminal device performs an evaluation process, at least when not configured to determine whether the measurement satisfies a timing condition. The evaluation process determines whether at least two conditions are both met at a given point in time or during a given time period. The conditions include a first condition relating to terminal device mobility and a second condition relating to terminal device location with respect to a cell provided by the first base station. The terminal device sends, to a second base station, an indication of the measurement result and an indication of whether the conditions are both met. A network device receives and processes these indications from the terminal device.

## Description

### Technical Field

The present disclosure relates to wireless communication systems, and more particularly to terminal devices and network devices operating in wireless communication networks. More specifically, the disclosure relates to measurement reporting and evaluation processes performed by terminal devices in radio resource control (RRC) idle or inactive states.

### Background

Communication management in wireless networks relies on measurement reporting to facilitate transitions between cells. Base stations work together to maintain connectivity as devices operate within the network, requiring information exchange about various network parameters and resource availability. Conventional approaches involve devices performing measurements and reporting results to network nodes. These measurements allow the network to manage communications and maintain service delivery.

The implementation of wireless network measurements involves multiple technical considerations. The frequency of measurements affects the level of detail available about network conditions while impacting operation of terminal devices. Similarly, measurement precision often requires specific monitoring periods or sampling approaches, which affects system efficiency. The quantity of measurement reports influences network signaling, while processing these reports requires computational capacity at network nodes.

In certain contexts, a network may take decisions relating to a terminal device, e.g. the setting of certain parameters such as SCell activation delay parameters, based on whether a cell is considered known or unknown to the terminal device. However, whether the cell is known to the terminal device may not be known to the network.

### Summary

According to a first aspect of the present disclosure there is provided a terminal device including at least one processor and memory storing instructions for performing operations. The terminal device can perform measurements related to a first base station while in a radio resource control (RRC) idle state or RRC inactive state. When the terminal device is not configured to determine whether measurements satisfy a timing condition, it performs an evaluation process. This evaluation process determines whether at least two conditions are met at a given point in time or during a given time period. These conditions include a first condition relating to terminal device mobility and a second condition relating to the terminal device's location with respect to a cell provided by the first base station. The terminal device sends indications of measurement results and whether both conditions are met to a second base station. Advantageously, this may provide a means by which the network may determine whether a cell should be considered known or unknown to the terminal device.

The terminal device may receive instructions to configure the evaluation process, including an indication of the given point in time or time period. Upon receiving these instructions, the terminal device configures itself accordingly.

The given time period may correspond to various intervals, such as when measurement samples are obtained, or between specific trigger events. These trigger events may include entering the RRC idle or inactive state upon receiving an RRC Release message or an RRC Suspend message, or events related to sending measurement results. The second trigger event may involve sending a random-access MSG1 message receiving a request for an early measurement reporting (EMR) report.

The evaluation process may be initiated in response to an evaluation trigger event. Such trigger events may include the terminal device sending a random-access MSG1 message events relating to activation of a secondary cell for the terminal device.

The terminal device may receive instructions to configure the evaluation process that include an indication of the evaluation trigger event. Upon receiving these instructions, the terminal device configures itself to perform the evaluation process when the specified trigger event occurs.

The first condition relating to terminal device mobility may be based on various mobility-related parameters. These parameters may include the speed at which the terminal device moves, whether the terminal device exhibits low mobility characteristics, or whether the terminal device remains stationary. The second condition may relate to how close the terminal device is to the edge of the network cell.

According to a second aspect of the present disclosure there is provided a method that may be implemented in a terminal device to perform measurements related to a first base station while in an RRC idle or inactive state. When the terminal device is not configured to evaluate measurement timing conditions, it performs an evaluation process. This process determines whether two conditions are simultaneously met at a specified time or during a specified period. These conditions relate to the terminal device's mobility and its location relative to a cell provided by the first base station. The terminal device then sends both the measurement results and information about whether these conditions are met to a second base station.

The method may include receiving configuration instructions specifying when to perform the evaluation process, including timing parameters. The terminal device then configures itself according to these received instructions.

The method may include receiving instructions that specify an evaluation trigger event for initiating the evaluation process. Upon receiving these instructions, the terminal device configures itself to perform the evaluation process when the specified trigger event occurs.

According to a third aspect of the present disclosure there is provided a network device including at least one processor and memory storing instructions for performing operations. The network device receives information from a terminal device, including measurement results related to a first base station obtained during the terminal device's RRC idle or inactive state. The network device also receives results from an evaluation process. These evaluation results indicate whether two specific conditions are simultaneously met at a given time or during a specified period. These conditions relate to the terminal device's mobility and its position relative to a cell provided by the first base station.

According to a further aspect of the present disclosure there is provided a method implemented in a network device involving receiving measurement results and evaluation process results from a terminal device. The measurement results relate to a first base station and are obtained while the terminal device is in an RRC idle or inactive state. The evaluation results indicate whether mobility-related and location-related conditions are simultaneously met at specific times or during specific periods.

The method may include determining the reliability or validity of the measurement results based on the evaluation process results. When the measurements relate to a candidate secondary cell for the terminal device, parameters for secondary cell activation may be determined based on the assessed reliability or validity of the measurements.

The described methods may be implemented through computer-readable media containing instructions that, when executed by a processor in a terminal device, cause the terminal device to perform the specified operations.

### Brief Description of the Figures

Examples of the present disclosure will now be described with reference to the accompanying drawings:
Fig. 1 is a schematic diagram showing a communication network comprising a cell;
Fig. 2 is a sequence diagram showing message exchanges between a base station and a user equipment;
Fig. 3 is a sequence diagram showing message exchanges between a terminal device and a base station;
Fig. 4 is a sequence diagram showing message exchanges between a terminal device and a second base station;
Fig. 5 is a timing diagram showing carrier states and interactions between a terminal device and a network;
Fig. 6 is a timing diagram showing carrier states and interactions between a terminal device and a network;
Fig. 7 is a schematic diagram showing an evaluation process for a terminal device;
Fig. 8 is a flow diagram showing a method for measurement and evaluation reporting by a terminal device;
Fig. 9 is a flow diagram showing a method performed by a base station for processing measurement reports;
Fig. 10 is a sequence diagram showing message exchanges between a terminal device and network components for performing measurements; and
Fig. 11 is a sequence diagram showing message exchanges between a terminal device and a base station for carrier evaluation.

### Detailed Description

The following embodiments are exemplary. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments. Further, when a particular feature, structure, or characteristic is described in connection of an embodiment, it is within the knowledge of one skilled in the art to apply such feature, structure, or characteristic in connection with other embodiments whether or not explicitly described. It shall be under-stood that although the terms "first," "second" and the like may be used herein to describe various elements, these elements should not be limited by these terms. These terms are only used to distinguish one element from another.

For the purposes of the present disclosure, the phrases "at least one of A or B", "at least one of A and B", and "A and/or B" means (A), (B), or (A and B). For the purposes of the present disclosure, the phrase "A, B, and/or C" means (A), (B), (C), (A and B), (A and C), (B and C), or (A, B, and C).

Embodiments described may be implemented in a communication network, such as any of the following radio access technologies (RATs): World-wide Interoperability for Microwave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and enhanced LTE (eLTE), 5G (also called NR), or any future RAT such as 6G. Moreover, communication within the communication network may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), and/or Discrete Fourier Transform spread OFDM (DFT-s-OFDM).

As used herein, the term "network device" or "network node" refers to a node in a communication network via which user equipment may access the network and/or which is capable of controlling radio communication and man-aging radio resources within a cell. The network node or network device may be referred to as a base station (BS), an access point (AP) or an access node. The network device may be, depending on the applied technology, for example, a node B (NodeB or NB), an evolved NodeB (eNodeB or eNB), an NR NB (also referred to as a gNB), a Remote Radio Unit (RRU), a radio head (RH), a remote radio head (RRH), a relay, an Integrated Access and Backhaul (IAB) node, a low power node, a non-terrestrial network (NTN) or non-ground network device such as a satellite network device, a low earth orbit (LEO) satellite and a geosynchronous earth orbit (GEO) satellite, or an aircraft network device.

Moreover, in connection of split radio access network (RAN), the network device may refer to a centralised unit (CU) of a base station and/or a distributed unit (DU) of a base station. An interface between CU and DU may be referred to as an F1 interface in NR. In the split RAN architecture, node operations may be carried out, at least partly, in the central/centralized unit, CU, (e.g. server, host or node) operationally coupled to the DU, (e.g. a radio head/node). One CU may control one or more DUs, acting at least as transmit/receive (Tx/Rx) nodes. In some embodiments, the DUs may comprise e.g. a radio link control (RLC), medium access control (MAC) layer and a physical (PHY) layer, whereas the CU may comprise the layers above RLC layer, such as a packet data convergence protocol (PDCP) layer, a radio resource control (RRC) and an internet protocol (IP) layers. Other functional splits are possible too. In practice, any processing task may be performed in either the CU or the DU and the boundary where the responsibility is shifted between the CU and the DU may depend on the applied implementation.

The term "terminal device" refers to any end device that may be capable of wireless communication. By way of example, a terminal device may be referred to as a communication device, user equipment (UE), a Subscriber Station (SS), or a Mobile Station (MS). The terminal device may include a mobile phone, a cellular phone, a smart phone, voice over IP (VoIP) phones, wireless local loop phones a tablet, a wearable terminal device, a personal digital assistant (PDA), portable computers, desktop computer, image capture terminal de-vices such as digital cameras, gaming terminal devices, music storage and play-back appliances, vehicle-mounted wireless terminal devices, USB dongles, an Internet of Things (IoT) device, a watch or other wearable, a head-mounted dis-play (HMD), a vehicle, a drone, a medical device and applications (e.g., remote surgery), an industrial device and applications (e.g., a robot and/or other wire-less devices operating in an industrial and/or an automated processing chain contexts), a consumer electronics device, a device operating on commercial and/or industrial wireless networks, and the like.

A term "resource", as used herein, may refer to radio resources in time domain, in frequency domain, in space domain, and/or in code domain. Some examples of resources include e.g. a physical resource block (PRB), a radio frame, a subframe, a time slot, a subband, a frequency region, a sub-carrier, a beam, etc. The term "transmission" and/or "reception" may refer to wirelessly transmitting and/or receiving via a wireless propagation channel on radio resources.

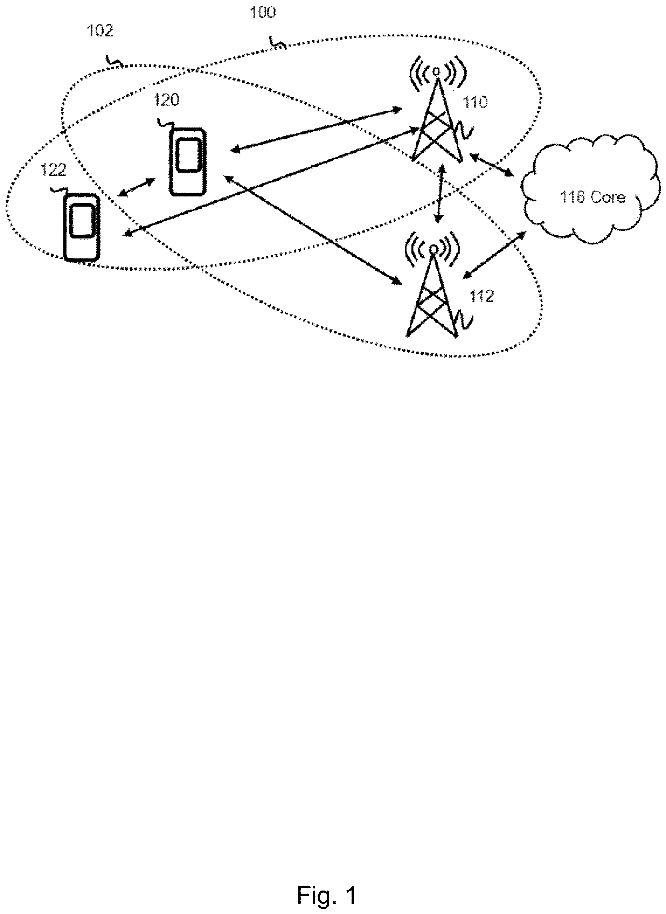

Fig. 1 illustrates an example of a communication network to which examples disclosed herein may be applied. The communication network or a cellular communication network may comprise a network node 110 providing one or more cells, such as cell 100, and a network node 112 providing one or more other cells, such as cell 102. Each cell may be, e.g., a macro cell, a micro cell, femto, or a pico cell, for example. The cell may define a coverage area or a service area of the corresponding access node. The network node 110 may provide a user equipment (UE) 120 (one or more UEs) with wireless access to the communication network. The wireless access may comprise downlink (DL) communication from the network node to the UE 120 and uplink (UL) communication from the UE 120 to the network node. Examples of uplink channels comprise physical uplink control channel (PUCCH) for transmitting control information and physical uplink shared channel (PUSCH) for transmitting data towards the network. Examples of downlink channels comprise physical downlink control channel (PDCCH) for transmitting control information and physical downlink shared channel (PDSCH) for trans-mitting data towards the user equipment.

There may be a plurality of UEs 120, 122 in the system. Each of them may be served by the same or by different network nodes 110, 112. UE may be configured with dual connectivity (DC), wherein the UE, e.g. UE 120, may be connected to multiple network nodes 110, 112. The UEs 120, 122 may communicate with each other, in case device-to-device (D2D) communication interface is established between them via a so-called sidelink (SL). Such D2D communications may be referred to as machine-to-machine, peer-to-peer (P2P) communications, or vehicle-to-vehicle (V2V), for example. In the case of multiple network nodes in the communication network, the network nodes may be connected to each other via an interface. LTE specifications call such an interface as X2 interface. An interface between an LTE node and a 5G node, or between two 5G nodes may be called Xn interface.

The network nodes 110 and 112 may be further connected via an-other interface to a core network 116 of the communication network. The LTE specifications specify the core network as an evolved packet core (EPC), and the core network may comprise e.g. a mobility management entity (MME) and a gateway node. The MME may handle mobility of terminal devices in a tracking area encompassing a plurality of cells and handle signalling connections between the terminal devices and the core network. The gateway node may handle data routing in the core network and to/from the terminal devices. The 5G specifications specify the core network as a 5G core (5GC). The 5G core may comprise e.g. an access and mobility management function (AMF) and a user plane function/gateway (UPF) and other functions. The AMF may handle termination of non-access stratum (NAS) signalling, NAS ciphering & integrity protection, registration management, connection management, mobility management, access authentication and authorization, security context management. The UPF node may support packet routing and forwarding, packet inspection and quality of service (QoS) handling, for example.

### Network Measurement Reporting Operations

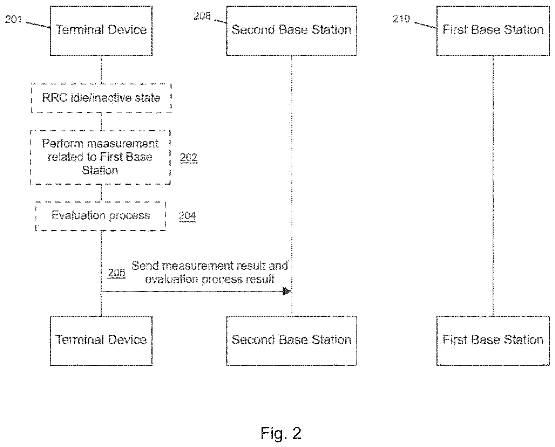

Fig. 2 illustrates an example of a method that may be implemented in the communication network shown in Fig. 1. The method involves interactions between a terminal device 201, a second base station 208, and a first base station 210. This method may form part of an enhancement to Release 18 eEMR (enhanced Early Measurement Reporting), in which a terminal device reports results of an evaluation process. This allows the validity of measurement results to be determined by the network. These results may be reported as part of an EMR (Early Measurement Reporting) process.

At 202, the terminal device 201 performs measurements related to the first base station 210. These measurements may comprise idle/inactive measurements of source and neighboring base stations. The measurements may support early measurement reporting (EMR) when the terminal device later moves to RRC_CONNECTED state, enabling early setup of Carrier Aggregation or Dual Connectivity. The measurement result may form part of a Layer 3 measurement report, for example, comprising RSRP or RSRQ measurements relating to a particular cell provided by the first base station 210. In some examples, these measurements may have additional or alternative uses, such as to allow the terminal device 201 to ensure it is camped on the best cell and to initiate cell reselection when identifying a new best cell.

At 204, the terminal device 201 performs an evaluation process relating to a time period or given point in time. This process involves determining whether at least one of a first condition or a second condition is met. The first condition relates to terminal device mobility, such as speed of movement, low mobility status, or stationary status. The second condition relates to the location of the terminal device 201 with respect to a cell provided by the first base station 210, such as proximity to a cell edge. The evaluation process may occur during a time period among various time periods, such as when measurement samples are obtained or between specific trigger events. For example, the evaluation process may be performed during a time period when measurement samples are obtained, or during a period beginning when the terminal device enters an RRC idle or inactive state and ending when measurement results are sent. Alternatively, the time period may start when measurements begin or when measurements complete, ending when results are transmitted.

At 206, the terminal device 201 sends measurement results and evaluation process results to the second base station 208. This sending may include an indication of which condition is met or which conditions are met. The second base station 208 may be a source base station that requests EMR or other idle/inactive mode measurements from the terminal device. The first base station 210 may provide a cell that the terminal device monitors, for example, for potential connection as a secondary cell in carrier aggregation or dual connectivity, or to inform cell re-selection decisions.

The evaluation process may assess multiple conditions independently or in combination. The terminal device 201 may indicate whether one or both conditions are met, and which specific conditions are satisfied.

The first condition related to the mobility of the terminal device 201 may be represented by any one or more of the following, for example:
a. *mobilityState* information
b. *lowMobilityEvaluation* status
c. *stationaryMobilityEvaluation* status
d. *cellEdgeEvaluationWhileStationary* status

These above condition a. to d. may be determined according to procedures relating to relaxed measurement criterion specified in 3GPP TS 38.304 v18.3.0.

*mobilityState* provides an estimate of the speed of the terminal device 201 (whether low mobility, medium mobility or high mobility) depending on the number of the cell reselections performed during an idle/inactive period. *lowMobilityEvaluation* indicates whether the UE has low mobility status when certain evaluation conditions are fulfilled.

As an example, if the terminal device 201 *mobilityState* information indicates low mobility or if *lowMobilityEvaluation* is fulfilled, this may indicate that a change in the signal condition (e.g., RSRP) of the measured SCell is not likely to change abruptly and can still be considered valid for a longer period of time, e.g., even outside of a validity timer period. The validity timer may, for example, be either of *measIdleValidityDuration-r18* and/or *measReselectionValidityDuration-r18* as described in 3GPP TS 38.133 version 18.7.0.

If *stationaryMobilityEvaluation* or *cellEdgeEvaluationWhileStationary* criteria are fulfilled, the terminal device 201 may be deemed as stationary. If the terminal device 201 is stationary, even when located near the cell edge, the current measurement may not change significantly over a given time period. Therefore, the current measurement report of the SCell may be considered to remain valid measurement for an extended time period while the terminal device 201 does not change location.

The second condition is related to the location of the terminal device 201. The second condition may indicate whether the terminal device 201 is in a centre of the cell or at a cell edge. The *cellEdgeEvaluation* condition may provide this indication. If the UE is not at the cell edge, at the point of reporting the measurement results, it may be the case that the signal levels (e.g., RSRP) of the SCell are not changed significantly or dropped to a power level that is enough to make reported measurement results non-usable (even if the terminal device 201 has been moving since the measurements were performed).

The first and second conditions may be combined in order to make an overall indication of the validity or reliability of the measurements. For example, if both the first and second condition are fulfilled, then this may provide a stronger indication of validity or reliability than if only one of the first and second conditions is fulfilled. The terminal device 201 may be configured to report the evaluation result in any suitable way. For example, an indication, e.g., using a single bit, may be used to indicate that at least one of the conditions is satisfied. In examples where an the option to provide a stronger indication is provided, the terminal device may, additionally, or alternatively, indicate when both of the first condition and second condition are met.

The sending of results may occur in response to various triggers. Such triggers may initiate the sending of measurement and evaluation results. These include initiating an RRC connected state entry process, receiving a measurement report request, or determining that evaluation conditions are met. The terminal device 201 may send these results after determining that at least one condition is met, and may perform an accuracy check before transmission.

The reported evaluation process results may enable the network to assess the quality and validity of the reported idle/inactive mode measurement results, for example, relating to potential SCell carriers for secondary cell activation. For measurements related to candidate secondary cells, the network device may use this assessment to determine cell status (known/unknown) or set activation parameters. The method may therefore provide a means by which the network may determine whether a cell should be considered known or unknown, which otherwise may be known to the terminal device but not to the network. For example, the indication from the terminal device to the network may comprise an indication of whether the cell is known or unknown to the terminal device.

The evaluation process may be performed when the terminal device determines it is not configured to assess a timing condition. The timing condition relates to the validity timer. The validity timer may, for example, be either of *measIdleValidityDuration-r18* and/or *measReselection ValidityDuration-r18.*

### Message Exchange Operations

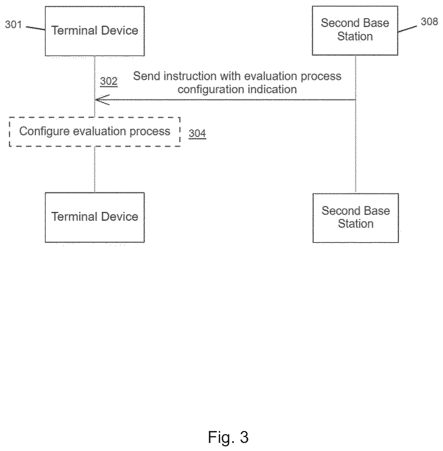

Fig. 3 relates to features shown in Fig. 2 and illustrates operations that may occur prior to step 202 or step 204. The sequence diagram shows message exchanges between a terminal device 301 and a second base station 308. The terminal device 301 may have any of the features of the terminal device shown in Fig. 1 or Fig. 2. The second base station 308 may have any of the features of the second base station in Fig. 2 and may, for example, be a source base station which provides configuration information to the terminal device. Although, in Fig. 2, the second base station 308 is shown sending the instruction, in other examples, a different base station may send this instruction. For example, any base station which provides configuration information to the terminal device 301 may send the instruction.

At step 302, the second base station 308 sends a message containing an instruction with evaluation process configuration information to the terminal device 301. The instruction may indicate the given point in time or the given time period for the evaluation process, which may, for example, be any of the time periods described with respect to Fig. 2. The instruction may additionally or alternatively include other configuration information, such as an indication of an evaluation trigger event having features described with respect to Fig. 2. The instruction may also include an indication of at least one particular mobility or location condition that the terminal device should evaluate.

The instruction may be included in various message types. For example, it may be included in a connection release message, such as an RRC release message or an RRC suspend message, where an information element (IE) instructs the terminal device to perform mobility and/or cell edge evaluation and report the evaluation result during EMR reporting. In some examples, the instruction may be sent in a System Information Block (SIB). Alternatively, the instruction may be sent in response to a request from the terminal device for relaxed measurement criteria.

At step 304, the terminal device 301 configures itself to perform the evaluation process in accordance with the instructions received at step 302. Following this configuration, the terminal device performs the evaluation process as shown in Fig. 2.

The configuration instruction enables the network to dynamically control the performing of the evaluation process by the terminal device. The network can, for example, specify different evaluation timing, or different evaluation criteria for different terminal devices based on current network conditions and requirements. This allows the network to efficiently manage measurement reporting across multiple terminal devices while adapting to changing network needs.

### Terminal Device Evaluation Process

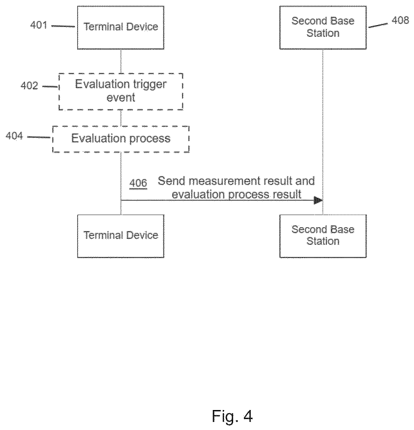

Fig. 4 relates to features shown in Figs. 1, 2, and 3, illustrating an example where a terminal device performs an evaluation process in response to an evaluation trigger event. The sequence diagram shows message exchanges between a terminal device 401 and a second base station 408.

The terminal device 401 may have any of the features of the terminal device shown in Figs. 1 to 3. The second base station 408 may have any of the features of the second base station described in Figs. 2 and 3.

At 402, an evaluation trigger event occurs. This trigger event may be any of the examples described in relation to Figs. 2 and 3. Examples of trigger events include entering RRC connected state, receiving a measurement report request, sending of an RRC MSG1 message by the terminal device 401 or meeting specific conditions. The trigger event may be configured through instructions received from the network as shown in Fig. 3, or, for example, may be pre-defined in technical standards in accordance with which the terminal device is configured to act.

At 404, the terminal device 401 performs an evaluation process, which may incorporate any of the features of the evaluation processes described in Figs. 2 and 3. This includes determining whether mobility conditions or location conditions are met at a given point in time or during a given time period.

At 406, the terminal device 401 sends measurement results and evaluation process results to the second base station 408. This sending process may incorporate any of the features of the sending process described in Figs. 2 and 3, including transmission of information about whether specific conditions are met and the results of any accuracy checks performed before sending.

Performing the evaluation process in response to specific trigger events enables selective processing that reduces computational overhead. The terminal device only initiates evaluation when relevant events occur rather than continuously performing evaluations. This event-driven approach minimizes power consumption by avoiding unnecessary processing during periods when evaluation is not needed.

### Measurement Timeline Operations

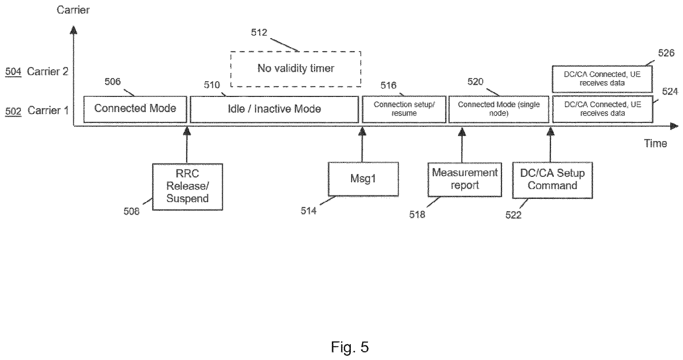

Fig. 5 relates to features shown in Figs. 1-4, illustrating an example timeline for measurement and evaluation processes. The timing diagram shows interactions of a terminal device with respect to carriers of a network. Time increases horizontally from left to right in the timeline. The diagram depicts the state of the terminal device with respect to the two carriers and various interaction points between the network and terminal device. This example relates to obtaining idle/inactive mode measurements for selecting carriers for carrier aggregation (CA) or dual connectivity (DC).

A first carrier 502 (Carrier 1) is a network carrier on which the terminal device initially operates in connected mode 506. This carrier may be provided by the second base station described in previous figures. A second carrier 504 (Carrier 2) represents another network carrier which the terminal device monitors during idle/inactive mode for potential use as an SCell when connection resumes. The terminal device performs measurements such as Reference Signal Received Power (RSRP) and Reference Signal Received Quality (RSRQ) on the second carrier 504. The terminal device may also monitor other carriers for potential use as an SCell though only the second carrier 502 is shown in this example. The terminal device may also perform similar measurements on the first carrier 502, for example, for use in cell re-selection.

During connected mode 506, the terminal device and network exchange data and control signaling. In this example, the network sends an RRC release message or an RRC suspend message 508 to transition the terminal device from connected mode to idle/inactive mode 510. As described in relation to previous examples, the RRC release/ suspend message 508 may include evaluation configuration information in an information element that configures the terminal device to monitor particular evaluation criteria relating to mobility/location while in idle/inactive mode. The configuration information may specify the time period for evaluating these criteria, such as from the time of receipt of RRC release/suspend 508 until connection resume 516. In some examples, the configuration information may specify for which frequency the terminal device should perform the evaluation, e.g., a PCell frequency or an SCell frequency.

In idle/inactive mode 510, the terminal device performs measurements on carriers including at least the first carrier 504, and may also measure first carrier 502. The terminal device obtains evaluation criteria relating to mobility and/or location while taking measurements in idle/inactive mode. No validity timer 512 is configured in this example, meaning the terminal device does not check measurements against a validity timing condition.

The terminal device sends a random access MSG1 message 514 to the network, and MSG1 514 initiates connection re-establishment with respect to carrier 502.

The sending of the random access MSG1 message 514 may trigger the terminal device to perform the evaluation process to evaluate the evaluation criteria. Alternatively, the terminal device may receive, from the network, a request (not shown in this figure) for a measurement report which may act as the trigger for the terminal device to perform the evaluation process.

During connection setup/resume 516, the terminal device re-enters connected mode on carrier 502. The terminal device sends a measurement report 518 containing measurement results and evaluation results to the network during connected mode 520, though this could alternatively occur immediately after MSG1 514 or during connection setup/resume 516.

At connected mode 520, the terminal device has re-entered connected mode but no SCell has been activated. The connection is a single node connection. The network sends a DC/CA setup command 522 to configure carrier 502 as the primary cell and carrier 504 as the secondary cell. The terminal device then enters dual connectivity/carrier aggregation (DC/CA) connected mode on both carriers 524, 526. For example, the first carrier 502 may act as a primary cell while the second carrier 504 may act as a secondary cell. The network may use the reported idle/inactive mode measurements to determine SCell activation delay or other activation parameters.

### Validity Timer Operations

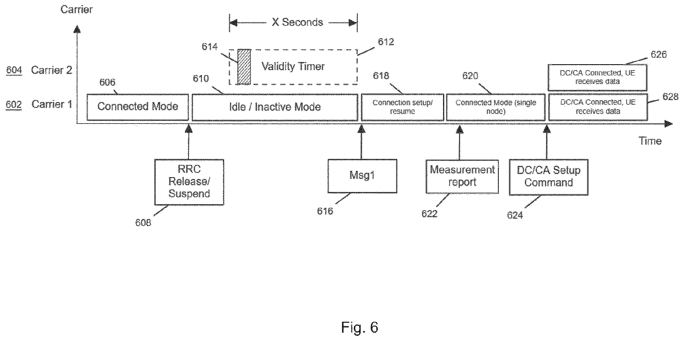

Fig. 6 relates to the features shown in Fig. 5, illustrating an alternative example where a validity timer is configured, in contrast to Fig. 5 where no validity timer is configured. The timing diagram shows carrier states and interactions between a terminal device and a network.

A first carrier 602 and second carrier 604 represent network carriers that the terminal device can utilize. As in the previous example, the terminal device initially operates in connected mode 606 before transitioning to idle/inactive mode 610 following receipt of an RRC release/suspend message 608. During idle/inactive mode 610, the terminal device performs measurements on at least second carrier 604, and may also measure first carrier 602.

A validity timer 612 is set in this example. Measurements taken in idle/inactive mode are checked against the validity timer to determine whether they meet a timing condition. For example, in this example, measurements are checked to determine whether they were taken within X seconds prior to sending random access MSG1 message 616. The validity timer may, for example, be either of *measIdleValidityDuration-r18* and/or *measReselectionValidityDuration-r18* as described in 3GPP TS 38.133 version 18.7.0. The checking of measurements against the validity timer 614 may form part of the evaluation process performed by the terminal device. A measurement being within the validity timer period may provide an indication that it is valid. The terminal device may check measurements against the validity timer and provide an indication to the network when reporting a measurement of whether the measurement is within the timer period.

A measurement coverage period 614 is shown which represents a period during the period of the validity timer 612 where the terminal device obtains idle/inactive mode measurements. The measurements can be seen to be sparse and not regular throughout the validity timer period. The terminal device may determine that the measurements are sparse according to a pre-defined regularity criterion. In examples, the regularity criterion may be not met if at least one of the following is true: a frequency or number of measurements obtained within at least a part of validity timer period is lower than a pre-determined threshold; or at least one interval between measurements during the validity timer period exceeds a pre-determined threshold.

The terminal device proceeds in the same manner as described with reference to the previous example, namely, the terminal device initiates connection re-establishment by sending random access MSG1 message 616, followed by connection setup/resume 618 to enter connected mode 620. While in connected mode, the terminal device sends a measurement report 622. The network then sends a DC/CA setup command 624 to configure carrier aggregation or dual connectivity. The terminal device then enters dual connectivity/carrier aggregation connected mode on both carriers 626, 628. For example, the first carrier 602 may act as a primary cell while the second carrier 604 may act as a secondary cell. The network may use the reported idle/inactive mode measurements to determine SCell activation delay or other secondary cell activation parameters.

The evaluation process described in previous examples may still be applied when the validity timer is set or configured. In this case, the terminal device tests whether measurements during the validity timer period are sparse and performs the evaluation process if the measurements are determined to be sparse. Similarly to in the example of Fig. 5, the evaluation process may be performed in response to an evaluation trigger event, for example, the sending of the MSG1 514. In some examples, when the evaluation trigger event occurs, the terminal device may check whether measurements during the validity timer period are sparse, and, if so, perform the evaluation process. This provides an enhanced indication of the validity or reliability of the reported measurements. The terminal device may send a measurement report 622 containing measurement results and evaluation results. For example, where measurements are sparse, measurements occurring during the validity timer may nevertheless be unreliable, as the sparsity may indicate that the terminal device has moved to another location during the validity timer period. Using the results of the evaluation process in such cases may indicate that such results are reliable despite being sparse.

### Terminal Device Cell Evaluation Operations

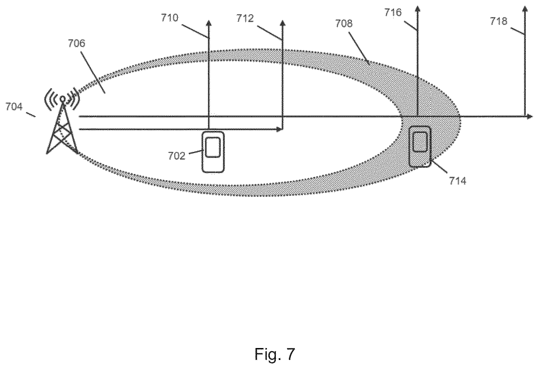

Fig. 7 is a schematic drawing illustrating an example scenario in which methods described herein may be implemented. A first base station 704 provides a cell 706 having a cell edge region 708. The cell 706 can function as a candidate secondary cell (SCell) that is monitored by terminal devices in the vicinity.

A first terminal device 702 begins taking measurements related to the cell 706 from a measurement starting location 710. The first terminal device 702 remains within the cell 706 while moving at a relatively low speed, reaching a measurement reporting location 712 that is still well within the cell boundaries. Due to the terminal device's 702 position near the cell center and its low mobility when reporting, the measurements can be considered reliable for potential operations such as SCell activation.

A second terminal device 714 demonstrates a contrasting scenario, starting measurements from a position 716 near the cell edge 708. Due to this starting position and the movement of the second terminal device 714, by the time the second terminal device 714 reaches its measurement reporting location 718, it has moved outside the cell 706. This scenario can result in measurements that may not accurately reflect the current radio conditions, potentially affecting their usefulness for operations such as SCell configuration.

In another example (not shown), a terminal device may begin at the centre of the cell 706 but may be travelling at a speed such that it is outside of the cell 706 when reporting its measurements such that the measurements may be similarly unreliable.

The terminal devices can perform measurements while in a radio resource control (RRC) idle state or an RRC inactive state. During an evaluation process, a terminal device can assess conditions related to its mobility and its location relative to the cell 706. The terminal device can then transmit both the measurement results and information about the evaluation process to another base station. This evaluation information can provide context about the reliability or applicability of the measurements based on factors such as the terminal device's movement and position relative to the cell.

The evaluation process combines mobility status and location information with measurement results to provide additional context. This contextual information enables more informed decisions about cell configuration and activation. The combined data allows the network to better assess the reliability and applicability of measurements based on the terminal device's movement patterns and positioning.

The ability to perform measurements in both RRC idle and inactive states allows for ongoing network monitoring without requiring the terminal device to maintain full connectivity. This approach reduces signaling overhead while maintaining awareness of network conditions. The terminal device can continue gathering relevant measurement data even during periods of reduced activity.

### Terminal Device Measurement Flow Process

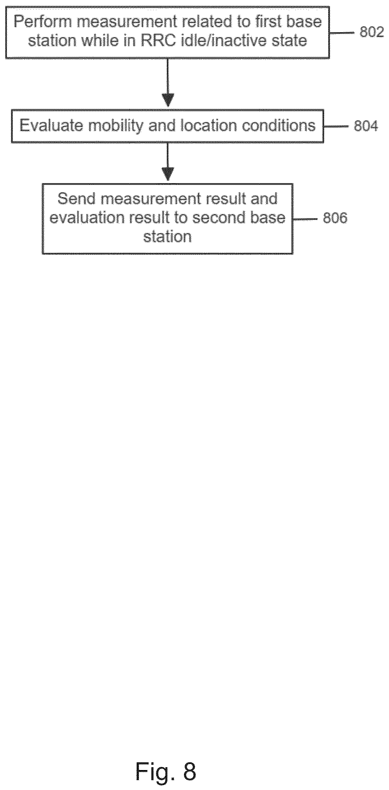

Fig. 8 illustrates a flow diagram representation of the method shown in Fig. 2. The flow diagram depicts steps performed by a terminal device for measurement and evaluation reporting.

At block 802, the terminal device performs measurement related to a first base station while in a radio resource control (RRC) idle state or in an RRC inactive state. These measurements may comprise idle/inactive measurements of source and neighboring base stations, which can support early measurement reporting when the terminal device transitions to RRC_CONNECTED state.

At block 804, the terminal device evaluates mobility and location conditions. This evaluation process determines whether, at a given point in time or during a given time period, at least one of two conditions is met. A first condition relates to the mobility of the terminal device, such as speed of movement, low mobility status, or stationary status. A second condition relates to the location of the terminal device with respect to a cell provided by the first base station, such as proximity to a cell edge. In some examples, the evaluation process may be performed at least when the terminal device is not configured to determine whether the measurement satisfies a timing condition (or not configured with the validity timer). The evaluation process may, in some examples, also be performed when the terminal device is configured to determine whether the measurement satisfied a timing condition (or configured with the validity timer).

At block 806, the terminal device sends measurement results and evaluation results to a second base station. The sending includes an indication of the measurement result and an indication of the evaluation process result. This transmission may occur in response to various triggers, such as initiation of a process for entering RRC connected state or receipt of a measurement report request. The second base station may use these results to assess the quality and validity of the reported idle/inactive mode measurements. For example, indication of the evaluation process enables the second base station to determine whether the SCell is known or unknown to the UE. As another example, indication of the evaluation process enables the second base station to determine measurement reliability for SCell configuration or activation.

### Network Device Operations

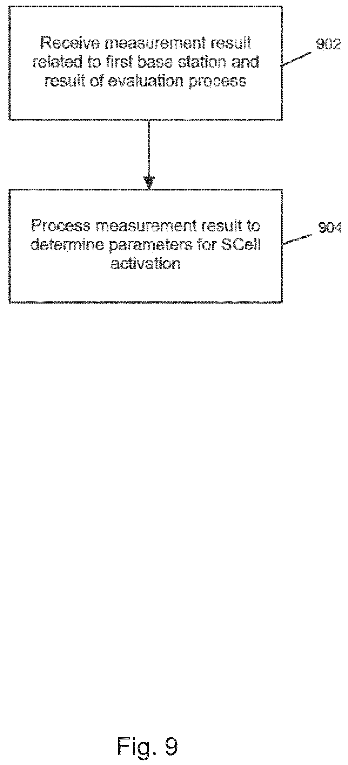

Fig. 9 relates to features shown in Fig. 2, illustrating a flow diagram showing operations performed by a network device, such as a base station. The network device corresponds to the second base station in certain examples, though in other examples it may be any base station configured to receive idle/inactive mode measurements from the terminal devices.

Prior to the operations shown, the network device may transmit configuration instructions to the terminal device specifying parameters for the evaluation process which parameters may include any described in previous examples, such as a time period for performing the evaluation process, an evaluation trigger event or particular mobility/location conditions to be evaluated. In some examples, the network device may also send a request, such as an early measurement report (EMR) request, to trigger reporting of measurement results and evaluation results. In other examples, the terminal device may transmit measurements without an explicit request from the base station, for example, in response to an evaluation trigger event, such as transmission of a MSG1 message.

At 902, the network device receives measurement results related to a first base station and results of an evaluation process from a terminal device. The measurement results are obtained while the terminal device operates in RRC idle state or RRC inactive state. The evaluation results indicate whether certain conditions were met at a given point in time or during a given time period. These conditions include a first condition relating to terminal device mobility, such as movement speed or stationary status, and a second condition relating to the terminal device's location with respect to a cell provided by the first base station, such as proximity to cell boundaries. The evaluation process may be performed according to any configuration parameters provided by the network device or another network device, or may be performed according to a pre-defined configuration, e.g. specified in a standards specification.

At step 904, the network device may process the received information for various purposes. In certain examples, the network device uses the measurement results and evaluation results to determine parameters for secondary cell (SCell) activation relating to the first base station. The evaluation results help determine whether the first base station should be considered known or unknown, which may influence SCell activation delay requirements. For instance, if the evaluation results indicate the terminal device remained stationary or maintained low mobility within the cell coverage area during measurements, the network device may classify the first base station as known, potentially allowing reduced SCell activation delays. Additionally, or alternatively, if the evaluation results indicate that the terminal device is at a centre of the cell at the evaluation time period, then the network device may determine that the measurement result is valid or reliable.

The network device receives comprehensive contextual information by obtaining both measurement results and evaluation process outcomes from the terminal device. This combined information allows the network device to build a more complete understanding of the terminal device's operating environment and status. The network device can utilize this rich context to make well-informed decisions regarding resource allocation, cell configuration, and network optimization.

The ability to receive measurements from terminal devices in idle or inactive RRC states enables continuous network monitoring without requiring devices to maintain active connections. Terminal devices can perform and report measurements during periods of low activity while conserving power resources. This approach supports efficient network operation while reducing signaling overhead and device power consumption.

The evaluation process considers multiple factors by incorporating both mobility-related and location-related conditions into the assessment. Analyzing terminal device movement patterns alongside spatial positioning relative to cell coverage provides detailed contextual insights. This multi-dimensional analysis enables more refined network planning and resource management decisions.

### Network Message Exchange Sequence

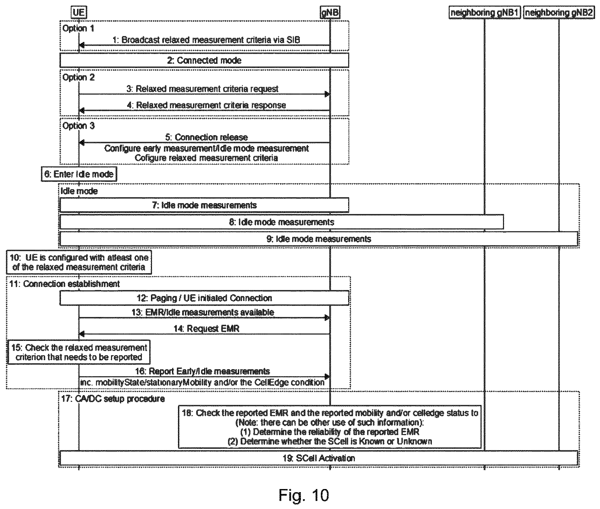

Fig. 10 illustrates a sequence diagram showing message exchanges that relate to the method features described with reference to Fig. 2.

The sequence diagram shows message exchanges between a terminal device and network components during early measurement reporting procedures. These exchanges facilitate the reporting of measurement results and evaluation process outcomes while the terminal device is in RRC idle or inactive states. The terminal device performs measurements related to a first base station and conducts an evaluation process to determine whether mobility-related or location-related conditions are met at particular times or during specific periods.

The message flows demonstrate how the terminal device communicates both measurement results and evaluation process outcomes to a second base station. This communication may occur in response to various network triggers or requests. The evaluation process results enable the network to assess the validity or reliability of the reported idle/inactive mode measurements, which can be particularly relevant for scenarios such as secondary cell activation decisions.

The sequence of messages supports enhanced measurement reporting capabilities, allowing the terminal device to provide contextual information about its mobility state and location relative to cell boundaries alongside traditional measurement data. This enhanced reporting mechanism helps improve the network's ability to make informed decisions about resource allocation and cell configuration.

In this example, the evaluation criteria to be used by the UE to perform the evaluation process is relaxed measurement criteria provided by the gNB. The gNB may instruct the UE with the relaxed measurement criteria at any of Steps 1, 4 or 5. The diagram shows multiple alternatives, labelled as Option 1, Option 2 and Option 3, for the message sequence by the which the gNB may provide the UE with relaxed measurement criteria.

Under Option 1, at Step 1, the gNB broadcasts relaxed measurement criteria to the UE via SIB. At Step 2, the UE enters connected mode.

Under Option 2, at Step 3, the UE sends a request for relaxed measurement criteria to the gNB. The gNB responds at Step 4 with a relaxed measurement criteria response.

Under Option 3, at Step 5, the gNB sends a connection release/suspend message to the UE. The connection release message configures early measurement reporting parameters and idle/inactive mode measurement parameters.

At Step 6, the UE enters idle mode.

At Steps 7, 8 and 9, while in idle mode, the UE performs idle mode measurements with respect to the gNB, a neighbouring gNB1, and a neighbouring gNB2.

At Step 10, the UE is configured with at least one of the relaxed measurement criteria.

At Step 11, connection establishment begins. This involves Step 12 which may be a paging or UE initiated connection step. At Step 13, the UE indicates to the gNB that EMR/idle measurements are available. At Step 14, the gNB requests that the EMR measurements are reported. At Step 15, the UE checks according to its configuration the evaluation criterion or criteria, which in this example is the same as relaxed measurement criteria, that needs to be reported. At Step 16, the UE reports the EMR/idle measurements and includes an indication of the result of the evaluation process, namely, in this example, an indication of whether the conditions mobility State or stationaryMobility are met and/or whether the condition CellEdge is met.

At Step 17, a carrier aggregation (CA) or dual connectivity (DC) setup procedure is performed. During this procedure, at Step 18, the gNB checks the reported mobility and/or location information. The gNB may use this information to, for example, determine validity or reliability of the reported measurement and/or to determine whether the SCell to which the measurement relates can be considered known or unknown.

In some examples, if the UE determines, e.g. at Step 12, that a validity timing condition is not configured against which to check the EMR/idle/inactive measurements (e.g. using either of the validity timers measIdleValidityDuration-r18 and/or measReselectionValidityDuration-r18), then, in response, the UE performs the evaluation process and checks the mobility and/or location conditions. The UE then generates a report and sends this to the gNB, e.g., at Step 13. In some examples, the report might use a single bit to indicate that at least one condition is satisfied, e.g. "1" indicating that at least one condition is satisfied and "0" indicating that no condition is satisfied. In some examples, the UE may indicate when two or more conditions are satisfied. For example, a plurality of pre-defined conditions may be defined which if satisfied together provide a stronger indication of validity or reliability of the associated measurement. For example, if the UE determines whether a plurality of pre-defined conditions is satisfied, e.g., UE determines that (i) lowMobilityEvaluation is fulfilled, and (ii) cellEdgeEvaluation is not fulfilled. The UE may indicate in its report whether the reported measurement result has such a stronger indication of validity by indicating that the pre-defined plurality of conditions is met.

### Example implementations

Certain example implementations of certain aspects of the present disclosure may involve the inclusion of an information element sent to the UE during RRC release or RRC Suspend. An example of such an information element may be as follows:

### MobilitylcelledgestatusConfig

*Indicate that the UE should do mobility and*/*or celledge status evaluation and report them to the network during EMR reporting.*

In one example implementation of certain aspects of the present disclosure, 3GPP TS 38.133 may specify the following:
SCell in FR1 is known if it has been meeting the following conditions:
- During the period equal to max(5*measCycleSCell, 5*DRX cycles) for FR1 before the reception of the SCell activation command:
- the UE has sent a valid measurement report for the SCell being activated and
- the SSB measured remains detectable according to the cell identification conditions specified in clause 9.2 and 9.3.
- the SSB measured during the period equal to max(5*measCycleSCell, 5*DRX cycles) also remains detectable during the SCell activation delay according to the cell identification conditions specified in clause 9.2 and 9.3.
- if *measldle ValidityDuration-r18* or *measReselectionValidityDuration-r18* is not configured, UE satisfies one of the conditions including `lowMobilityEvaluation is fulfilled,' 'UE stationaryMobilityEvaluation is fulfilled,' `UE cellEdgeEvaluationWhileStationary is fulfilled,' and `UE cellEdgeEvaluation is not fulfilled.'

In one example implementation of certain aspects of the present disclosure, 3GPP TS 38.133 may additionally specify the following:
For the first SCell activation in FR2 bands, the SCell is known if it has been meeting the following conditions:
- During the period equal to 4s for UE supporting power class 1/5 and 3s for UE supporting power class 2/3/4 before UE receives the last activation command for PDCCH TCI, PDSCH TCI (when applicable) and semi-persistent CSI-RS for CQI reporting (when applicable):
- the UE has sent a valid L3-RSRP measurement report with SSB index, and
- SCell activation command is received after L3-RSRP reporting and no later than the time when UE receives MAC-CE command for TCI activation
- During the period from L3-RSRP reporting to the valid CQI reporting, the reported SSBs with indexes remain detectable according to the cell identification conditions specified in clauses 9.2 and 9.3, and the TCI state is selected based on one of the latest reported SSB indexes.
- if *measIdleValidityDuration-r18* or *measReselectionValidityDuration-r18* is not configured, UE satisfies one of the conditions including `lowMobilityEvaluation is fulfilled,' 'UE stationaryMobilityEvaluation is fulfilled,' `UE cellEdgeEvaluationWhileStationary is fulfilled,' and `UE cellEdgeEvaluation is not fulfilled.'

This adds a condition to determine the known condition used for fast SCell activation. In particular, when measIdleValidityDuration-r18 or measReselectionValidityDuration-r18 is not configured, the SCell can be deemed as a `known cell' if UE satisfies at least one of the conditions including `lowMobilityEvaluation is fulfilled,' `UE stationaryMobilityEvaluation is fulfilled,' 'UE cellEdgeEvaluationWhileStationary is fulfilled,' or `UE cellEdgeEvaluation is not fulfilled.'

In another example implementation, modification may be made to the following section of 3GPP TS 38.331 version 18.3.0:

### 4.7.3 Measurement Report Requirements

A UE shall perform validity check and report valid measurement results:
- if the UE is supporting [Measurement validation based on EMR measurement] and *measIdleValidityDuration-r18* is configured for carriers in *measIdleCarrierListNR-r16* or *measIdleCarrierListEUTRA-r16,*
- if the UE is supporting [Measurement validation based on non-EMR measurement] and *measReselectionValidityDuration-r18* is configured for carriers in *measReselectionCarrierListNR-r18*

The measurement results are considered valid if the following conditions are met for the validity check:
- the measurements are performed before msg1 transmission for RRC resume/setup request within the last:
- measIdleValidityDuration-r18 seconds for carriers configured in measIdleCarrierListNR-r16 or measIdleCarrierListEUTRA-r16, and/or
- *measReselectionValidityDuration-r18* seconds for carriers configured in *measReselectionCarrierListNR-r18,*
- the measurement results satisfy measurement accuracy requirement at the measurement instance.

Otherwise, the measurement results are considered invalid. The UE shall not report invalid measurement results when *measIdleValidityDuration-r18* and/or *measReselectionValidityDuration-r18* is configured.

If the *measIdleValidityDuration-r18* is not configured, the UE is not required to perform validity check for carriers in *measIdleCarrierListNR-r16* and *measIdleCarrierListEUTRA-r16,* and the UE may report measurement results given the measurement results satisfy measurement accuracy requirement at the measurement instance.

If the *measReselectionValidityDuration-r18* is not configured, the UE is not required to perform validity check for carriers configured in *measReselectionCarrierListNR-r18,* and the UE may report measurement results given the measurement results satisfy measurement accuracy requirement at the measurement instance.

RSRP, RSRQ measurements contained in the measurement reports shall meet the corresponding accuracy requirements at the measurement instance specified in the clauses 10.1.2B, 10.1.3B, 10.1.4B, 10.1.5B, 10.1.7B, 10.1.8B, 10.1.9B, 10.1.10B.

The modifications to the section may, for example, be as follows:
**The SCell is known if it has been meeting the following conditions:**
If the measReselectionValidityDuration-r18 (the other timer as well) is configured and UE reported valid idle mode measurements
Otherwise, if measReselectionValidityDuration-r18 is NOT configured, and at least one of the following conditions is met
   - UE *lowMobilityEvaluation* is fulfilled, or
   - UE *stationaryMobilityEvaluation* is fulfilled, or
   - UE *cellEdgeEvaluationWhileStationary* is fulfilled, or
   - UE *cellEdgeEvaluation* is not fulfilled, or
   - UE *lowMobilityEvaluation* is fulfilled and UE *cellEdgeEvaluation* is not fulfilled.

Additionally, it may be specified that:
If the *measIdleValidityDuration-r18* is not configured, the UE is not required to perform validity check for carriers in *measIdleCarrierListNR-r16* and *measIdleCarrierListEUTRA-r16,* and the UE may report measurement results given the measurement results, including mobility state and/or celledge condition, satisfy measurement accuracy requirement at the measurement instance.
If the *measReselectionValidityDuration-r18* is not configured, the UE is not required to perform validity check for carriers configured in *measReselectionCarrierListNR-r18,* and the UE may report measurement results, including mobility state and/or celledge condition, given the measurement results satisfy measurement accuracy requirement at the measurement instance.

### Apparatus

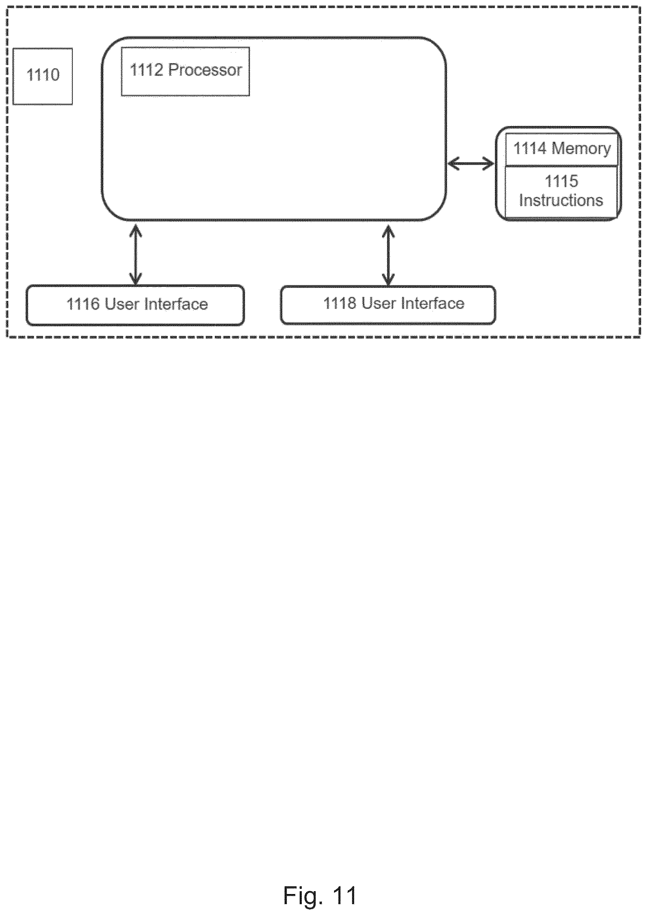

Fig. 11 shows, by way of example, a block diagram of an apparatus 1110. The apparatus 1110 comprises, for example, at least one processor 1112 and at least one memory 1114 storing instructions 1115 that, when executed by the at least one processor, cause the apparatus 1110 at least to perform the method or methods as disclosed herein, and any of the embodiments thereof. In an example, the at least one memory and the instructions (e.g. a computer program code, software), are configured, with the at least one processor, to cause the apparatus 1110 to perform the method or methods as disclosed herein, and any of the embodiments thereof.

A processor 1112 may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a user equipment, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The memory 1114 may be implemented using any suitable data storage technology. The memory may comprise a database for storing data. The memory 1114 may be at least in part external to apparatus 1110 but accessible to apparatus 1110.

The instructions 1115 may be comprised in a computer readable medium or a non-transitory computer readable medium. A term non-transitory, as used herein, is a limitation of the medium itself (i.e. tangible, not a signal) as opposed to a limitation on data storage persistency (e.g. random access memory, RAM, vs. read only memory, ROM).

For example, the apparatus 1110 is a terminal device, such as the that of Fig. 1. As another example, the apparatus is comprised in such a terminal device, e.g. as a chipset configured to control the terminal device. The apparatus 1110 may be caused or configured to perform at least the method of Fig. 8 and/or any one or more of the examples described.

As another example, the apparatus 1110 is a network device, e.g. a network device of Fig. 1. In another embodiment, the apparatus is comprised in such a network node, e.g. as a chipset configured to control the network node. The apparatus 1110 may be caused or configured to perform at least the method of Fig. 9 and/or any one or more of the examples described.

The apparatus may comprise one or more entities of any of protocol layers, such as a MAC entity, an RRC entity, an RLC entity, a PDCP entity or a PHY entity. In some embodiments, the entity is configured to perform at least the method of Fig. 8 or Fig. 9, and/or any one or more of the examples described.

The apparatus 1110 comprises a radio interface 1116. The radio interface 1116 may provide the apparatus 1110 with communication capabilities. The radio interface 1116 may comprise a receiver configured to receive information in accordance with at least one cellular or non-cellular standard. The radio interface 1116 may comprise a transmitter configured to transmit information in accordance with at least one cellular or non-cellular standard. The receiver may comprise more than one receiver. The transmitter may comprise more than one transmitter. The radio interface 1116 may comprise a transceiver configured to receive and transmit information in accordance with at least one cellular or non-cellular standard. The transceiver may comprise more than one transceiver.

The apparatus 1110 may comprise a user interface 1118 comprising, for example, at least one of a keypad, a microphone, a touch display, a display, a speaker, etc. The user interface 1118 may be used to control the apparatus by the user. The user interface 1118 may be external to the apparatus 1110. For example, the apparatus 1110 may be connected to another device, such as a computer, either via wireless or wired connection, and the apparatus 1110 is controlled by the user via the computer.

In an embodiment, at least some of the processes described herein may be carried out by an apparatus comprising means for carrying out at least some of the described processes. Means for performing method steps as disclosed herein may include software and/or hardware components of the apparatus 1110. For example, the at least one processor 1112, the memory 1114, and the computer program code form means for carrying out the method or methods as disclosed herein, and any of the embodiments thereof. As used herein the term "means" is to be construed in singular form, i.e. referring to a single element, or in plural form, i.e. referring to a combination of single elements. Therefore, terminology "means for [performing A, B, C]", is to be interpreted to cover an apparatus in which there is only one means for performing A, B and C, or where there are separate means for performing A, B and C, or partially or fully overlapping means for performing A, B, C. Further, terminology "means for performing A, means for performing B, means for performing C" is to be interpreted to cover an apparatus in which there is only one means for performing A, B and C, or where there are separate means for performing A, B and C, or partially or fully overlapping means for performing A, B, C.

### Additional Variations and Details

Measurement and evaluation reporting may be triggered on the terminal device in response to one or more different network events. These may include one or more of requests for measurement results, random access procedures, or early measurement reporting requests. The terminal device may also, or in the alternative, initiate reporting based on meeting configured evaluation criteria or accuracy requirements.

A terminal device may be adapted to receive instructions to configure and control when evaluation processes are performed. This dynamic configuration allows the network to specify particular points in time or time periods for conducting evaluations. The network can adapt and adjust the timing of evaluations based on changing network conditions and requirements.

The ability to control evaluation timing through network signaling enables flexible measurement reporting schemes. The network can coordinate when terminal devices perform evaluations to optimize network resource usage. This coordination helps balance measurement accuracy with network efficiency.

Optionally, a terminal device may be adapted to receive evaluation process configuration parameters within a connection release message. This enables streamlined signaling between the network and terminal device. The terminal device can receive both the connection release and evaluation configuration parameters in a single message exchange. This approach reduces control plane overhead by eliminating the need for separate dedicated signaling to configure the evaluation process.

The optional use of flexible timing options enables the terminal device to adapt its measurement and evaluation processes to different operational scenarios. The terminal device can select appropriate timing windows based on when samples are collected, state transitions occur, or measurement activities take place. This flexibility enables optimized measurement handling across varying network conditions and requirements.

Optionally performing an evaluation process in response to specific trigger events allows for efficient resource utilization. The terminal device can conserve processing power by executing evaluations only when needed rather than continuously. This event-driven approach reduces unnecessary computations and minimizes power consumption during periods when evaluation is not required.

Optionally synchronizing an evaluation process with random access messaging allows the terminal device to assess network conditions when establishing a connection. The timing alignment with MSG1 transmission enables gathering of relevant measurement data during the initial access phase. This coordinated approach helps obtain an accurate view of the network state at a time when the terminal device begins interacting with the network.

Optionally performing an evaluation process during secondary cell activation enables flexible carrier aggregation operation. Measurements obtained while the terminal device is in idle or inactive states can be utilized when activating additional carriers. This allows the terminal device to maintain optimal multi-carrier performance based on previously gathered measurement data.

The optional ability to dynamically configure evaluation triggers through network instructions enables flexible control over when measurements are performed. The terminal device can adapt its measurement and evaluation behavior based on changing network conditions and requirements. This network-configurable approach allows measurement processes to be adjusted without requiring terminal device updates or modifications.

A terminal device may not be configured to determine whether measurements satisfy timing conditions, and when a terminal device is in that condition performing the evaluation process provides a fallback mechanism. This allows the terminal device to continue assessing measurement validity through alternative means. The evaluation process generates reliability indicators for the measurements even without timing capability checks, maintaining operational continuity and measurement usability.

A terminal device may transmit both measurement results and condition status information in a combined message. This reduces the total amount of signaling between the terminal device and base station compared to separate transmissions. A consolidated report maintains information transfer while reducing communication overhead between network elements.

An optional terminal device capability to indicate which specific conditions are met enables the network to make targeted decisions about resource allocation. The network can optimize its response based on knowing for example which mobility or cell edge conditions apply to the terminal device.

Optionally, the simultaneous evaluation of multiple conditions may allow for a more complete assessment of the terminal device's operating context. Considering both mobility state and location together provides a more nuanced understanding of the measurement environment. This multi-faceted analysis helps determine whether measurements accurately reflect actual network conditions. For example, performing a combined assessment of both first and second conditions enables a more detailed evaluation of the terminal device's operating state before transmitting measurement results. This approach may help determine when reporting should occur based on a more detailed analysis of the device's status. The terminal device can transmit measurement results together with status information indicating whether both evaluation conditions are satisfied.

Optionally, a terminal device may be adapted to consider movement speed and/or mobility status, such that measurement reporting can be selectively performed based on actual device mobility. For terminal devices exhibiting low mobility or which are determined to be stationary, signal conditions such as RSRP associated with measured secondary cells tend to remain relatively stable. This allows measurements to retain validity over extended time periods since signal characteristics change more gradually in such scenarios, and measurement reporting can be reduced.

Optionally, the first condition relating to mobility may be implemented using various mobility metrics. These could include instantaneous speed measurements, average velocity over time, acceleration patterns, or categorized mobility states like "stationary" or "low mobility." The mobility determination may utilize GPS data, cell handover frequency, Doppler measurements, or other mobility indicators.

Optionally, evaluating the terminal device's position relative to cell boundaries enables more selective measurement reporting. The terminal device can increase reporting in locations where handover decisions are most relevant for maintaining service continuity. This location-based approach helps optimize network resources by concentrating measurement activities in areas where cell transitions are more likely to occur.

The second condition relating to terminal device location may be assessed through various approaches. While cell edge proximity may be one implementation, other location-based metrics could be used such as signal strength measurements, timing advance values, or geometric coordinates relative to the cell center. Optionally, multiple location determination methods may be combined. Optionally, coordinating measurement and evaluation reporting with RRC connection establishment procedures enables timely status updates at key state transitions. The network receives current device measurement information precisely when the terminal device moves from idle or inactive to connected states. This synchronization of reporting with connection state changes helps maintain up-to-date network awareness of device conditions.

Optional accuracy checking functionality in a terminal device helps maintain data quality in the network. By verifying measurement results before transmission, the terminal device filters out unreliable or inaccurate measurements. This selective reporting approach reduces network processing overhead and enables more efficient resource utilization by focusing on validated measurement data.

Optionally, evaluating conditions during secondary cell activation enables efficient coordination of multiple carriers. The terminal device can leverage measurement data collected while in idle or inactive states to inform carrier aggregation decisions. This allows the network to optimize multi-carrier operation by considering the most recent measurement information when activating secondary cells.

When early measurement reporting is needed, the network device can promptly obtain both measurement data and associated evaluation results through a single request mechanism. A terminal device may optionally be adapted to reply to such a request by sending a single response including the set of information indicated by the request, enabling efficient assessment of the terminal device's status during initial reporting phases.

An optional terminal device capability to determine measurement reliability based on evaluation process results enables more precise network operation decisions. The network device can assess the quality and trustworthiness of received measurement data by analyzing the evaluation outcomes. This validation approach helps optimize network performance by ensuring decisions are based on dependable measurement information.

The optional use of reliability and/or validity indicators by a terminal device for secondary cell measurements enables more informed decisions about cell activation. Network devices can evaluate the quality and trustworthiness of measurements before proceeding with secondary cell configuration. This approach reduces processing overhead and network signaling by avoiding activation attempts based on unreliable or invalid measurement data.

An optional parameterized control of secondary cell activation enables flexible management of cell resources. A network device can adapt activation procedures based on different operational scenarios and requirements. This allows optimization of the activation process by considering factors such as whether cells are known or unknown to the terminal device. An optional terminal device capability to differentiate between known and unknown secondary cells allows for tailored cell activation procedures. When a secondary cell's status is identified, appropriate activation delay values can be selected based on this classification. This enables more efficient secondary cell activation by applying optimized timing parameters according to the cell's status.

Additional embodiments and examples according to the present disclosure are provided according to the following numbered clauses.
1. A terminal device comprising:
   at least one processor; and
   at least one memory storing instructions that, when executed by the at least one processor, cause the terminal device to perform operations comprising:
      performing a measurement related to a first base station while the terminal device is in a radio resource control (RRC) idle state or in an RRC inactive state;
      performing, at least when the terminal device is not configured to determine whether the measurement satisfies a timing condition, an evaluation process comprising:
         determining whether, at a given point in time or during a given time period, at least one of a first condition or a second condition is met, wherein:
         the first condition relates to a mobility of the terminal device; and
         the second condition relates to a location of the terminal device with respect to a cell provided by the first base station; and
      sending, to a second base station, an indication of a result of the measurement and an indication of a result of the evaluation process.
2. The terminal device of clause 1, wherein the instructions, when executed by the at least one processor, cause the terminal device to perform operations comprising:
   receiving an instruction to configure the terminal device to perform the evaluation process, the instruction including an indication of the given point in time or the given time period; and
   responsive to receiving the instruction, performing the evaluation process according to the instruction.
3. The terminal device of clause 2, wherein the instruction to configure the terminal device to perform the evaluation process is included in a connection release message.
4. The terminal device of any of clause 1 to clause 3, wherein the given time period is at least one of:
   a time period during which one or more samples from which the result of the measurement is derived are obtained; or
   a time period beginning at a time of a first trigger event responsive to which the terminal device enters the RRC idle state or the RRC inactive state and ending at a time of a second trigger event related to the sending of the indication of the result of the measurement or evaluation to the second base station; or
   a time period beginning at a start of the performing of the measurement and ending at a time of the second trigger event related to the sending of the indication of the result of the measurement or evaluation to the second base station; or
   a time period beginning at a completion of the performing of the measurement and ending at a time of the second trigger event related to the sending of the indication of the result of the measurement or evaluation to the second base station.
5. The terminal device of clause 4, wherein the first trigger event comprises the terminal device receiving an RRC Release message or an RRC Suspend message.
6. The terminal device of clause 4 or clause 5, wherein the second trigger event comprises:
   the terminal device sending a random-access MSG1 message; or
   the terminal device receiving a request for an early measurement reporting (EMR) report.
7. The terminal device of clause 1 to clause 6, wherein the performing the evaluation process comprises performing the evaluation process in response to an evaluation trigger event.
8. The terminal device of clause 7, wherein the evaluation trigger event comprises the sending, by the terminal device, of a random-access MSG1 message.
9. The terminal device of clause 7, wherein the evaluation trigger event relates to activation of a secondary cell for the terminal device.
10. The terminal device of any of clause 7 to clause 9, wherein the instructions, when executed by the at least one processor, cause the terminal device to perform operations comprising:
   receiving an instruction to configure the terminal device to perform the evaluation process, the instruction including an indication of the evaluation trigger event; and
   responsive to receiving the instruction, configuring the terminal device to perform the evaluation process in response to the evaluation trigger event.
11. The terminal device of any of clause 1 to clause 10:
   wherein the evaluation process is performed responsive to the terminal device determining that the terminal device is not configured to determine whether the measurement satisfies the timing condition.
12. The terminal device of any of clause 1 to clause 11, wherein the sending, to the second base station, the indication of the result of the measurement and the indication of the result of the evaluation process comprises:
   sending, to the second base station, an indication of whether at least one of the first condition and the second condition is met.
13. The terminal device of clause 12, wherein the indication of whether at least one of the first condition and the second condition is met comprises an indication of which of the first condition and the second condition is met.
14. The terminal device of any of clause 1 to clause 13, wherein:
   the evaluation process comprises determining whether the first condition and the second condition are both met.
15. The terminal device of clause 14, wherein the sending, to the second base station, the indication of the result of the measurement and the indication of the result of the evaluation process comprises:
   sending the indication of the result of the measurement and an indication of whether the first condition and the second condition are both met.
16. The terminal device of any of clause 1 to clause 15, wherein the first condition relates to:
   a speed of movement of the terminal device;
   whether the terminal device has low mobility; or
   whether the terminal device is stationary.
17. The terminal device of any of clause 1 to clause 16, wherein the second condition relates to:
   a proximity of the terminal device to an edge of the cell.
18. The terminal device of any of clause 1 to clause 17, wherein the sending, to the second base station, the indication of the result of the measurement and the indication of the result of the evaluation process is performed responsive to initiation of a process for entering the terminal device into an RRC connected state.
19. The terminal device of any of clause 1 to clause 18, wherein the sending, to the second base station, the indication of the result of the measurement and the indication of the result of the evaluation process is performed responsive to a request for the terminal device to report one or more measurement results.
20. The terminal device of any of clause 1 to clause 19, wherein the sending, to the second base station, the indication of the result of the measurement and the indication of the result of the evaluation process is performed responsive to the terminal device determining that at least one of the first condition and the second condition is met.
21. The terminal device of any of clause 1 to clause 20, wherein the instructions, when executed by the at least one processor, cause the terminal device to perform operations comprising:
   performing an accuracy check to determine whether the measurement satisfies an accuracy condition; and
   wherein the sending, to the second base station, the indication of the result of the measurement is performed responsive to a result of the accuracy check indicating that the measurement satisfies the accuracy condition.
22. A method performed by a terminal device, the method comprising:
   performing a measurement related to a first base station while the terminal device is in a radio resource control (RRC) idle state or in an RRC inactive state;
   performing, at least when the terminal device is not configured to determine whether the measurement satisfies a timing condition, an evaluation process comprising:
      determining whether, at a given point in time or during a given time period, at least one of a first condition or a second condition is met, wherein:
      the first condition relates to a mobility of the terminal device; and
      the second condition relates to a location of the terminal device with respect to a cell provided by the first base station; and
   sending, to a second base station, an indication of a result of the measurement and an indication of a result of the evaluation process.
23. The method of clause 22 comprising:
   receiving an instruction to configure the terminal device to perform the evaluation process, the instruction including an indication of the given point in time or the given time period; and
   responsive to receiving the instruction, performing the evaluation process according to the instruction.
24. The method of clause 23, wherein the instruction to configure the terminal device to perform the evaluation process is included in a connection release message.
25. The method of any of clause 22 to clause 24, wherein the given time period is at least one of:
   a time period during which one or more samples from which the result of the measurement is derived are obtained; or
   a time period beginning at a time of a first trigger event responsive to which the terminal device enters the RRC idle state or the RRC inactive state and ending at a time of a second trigger event related to the sending of the indication of the result of the measurement or evaluation to the second base station; or
   a time period beginning at a start of the performing of the measurement and ending at a time of the second trigger event related to the sending of the indication of the result of the measurement or evaluation to the second base station; or
   a time period beginning at a completion of the performing of the measurement and ending at a time of the second trigger event related to the sending of the indication of the result of the measurement or evaluation to the second base station.
26. The method of clause 25, wherein the first trigger event comprises the terminal device receiving an RRC Release message or an RRC Suspend message.
27. The method of clause 25 or clause 26, wherein the second trigger event comprises:
   the terminal device sending a random-access MSG1 message; or
   the terminal device receiving a request for an early measurement reporting (EMR) report.
28. The method of clause 22 to clause 27, wherein the performing the evaluation process comprises performing the evaluation process in response to an evaluation trigger event.
29. The method of clause 28, wherein the evaluation trigger event comprises the sending, by the terminal device, of a random-access MSG1 message.
30. The method of clause 28, wherein the evaluation trigger event relates to activation of a secondary cell for the terminal device.
31. The method of any of clause 28 to clause 30, comprising:
   receiving an instruction to configure the terminal device to perform the evaluation process, the instruction including an indication of the evaluation trigger event; and
   responsive to receiving the instruction, configuring the terminal device to perform the evaluation process in response to the evaluation trigger event.
32. The method of any of clause 22 to clause 31:
   wherein the evaluation process is performed responsive to the terminal device determining that the terminal device is not configured to determine whether the measurement satisfies the timing condition.
33. The method of any of clause 22 to clause 32, wherein the sending, to the second base station, the indication of the result of the measurement and the indication of the result of the evaluation process comprises:
   sending, to the second base station, an indication of whether at least one of the first condition and the second condition is met.
34. The method of clause 33, wherein the indication of whether at least one of the first condition and the second condition is met comprises an indication of which of the first condition and the second condition is met.
35. The method of any of clause 22 to clause 34, wherein:
   the evaluation process comprises determining whether the first condition and the second condition are both met.
36. The method of clause 35, wherein the sending, to the second base station, the indication of the result of the measurement and the indication of the result of the evaluation process comprises:
   sending the indication of the result of the measurement and an indication of whether the first condition and the second condition are both met.
37. The method of any of clause 22 to clause 36, wherein the first condition relates to:
   a speed of movement of the terminal device;
   whether the terminal device has low mobility; or
   whether the terminal device is stationary.
38. The method of any of clause 22 to clause 37, wherein the second condition relates to:
   a proximity of the terminal device to an edge of the cell.
39. The method of any of clause 22 to clause 38, wherein the sending, to the second base station, the indication of the result of the measurement and the indication of the result of the evaluation process is performed responsive to initiation of a process for entering the terminal device into an RRC connected state.
40. The method of any of clause 22 to clause 39, wherein the sending, to the second base station, the indication of the result of the measurement and the indication of the result of the evaluation process is performed responsive to a request for the terminal device to report one or more measurement results.
41. The method of any of clause 22 to clause 40, wherein the sending, to the second base station, the indication of the result of the measurement and the indication of the result of the evaluation process is performed responsive to the terminal device determining that at least one of the first condition and the second condition is met.
42. The method of any of clause 22 to clause 41 comprising:
   performing an accuracy check to determine whether the measurement satisfies an accuracy condition; and
   wherein the sending, to the second base station, the indication of the result of the measurement is performed responsive to a result of the accuracy check indicating that the measurement satisfies the accuracy condition.

## Claims

1. A terminal device comprising:
at least one processor; and
at least one memory storing instructions that, when executed by the at least one processor, cause the terminal device to perform operations comprising:
performing a measurement related to a first base station while the terminal device is configured in a radio resource control (RRC) idle state or in an RRC inactive state;
performing, at least when the terminal device is not configured to determine whether the measurement satisfies a timing condition, an evaluation process comprising determining whether, at a given point in time or during a given time period, at least two conditions are both met, the at least two conditions comprising:
a first condition relating to a mobility of the terminal device; and
a second condition relating to a location of the terminal device with respect to a cell provided by the first base station; and
sending, to a second base station, an indication of a result of the measurement and an indication of whether the at least two conditions are both met.

2. The terminal device of claim 1, wherein the instructions, when executed by the at least one processor, cause the terminal device to perform operations comprising:
receiving an instruction to configure the terminal device to perform the evaluation process, the instruction including an indication of the given point in time or the given time period; and
responsive to receiving the instruction, configuring the terminal device to perform the evaluation process.

3. The terminal device of claim 1 or claim 2, wherein the given time period is at least one of:
a time period during which one or more samples from which the result of the measurement is derived are obtained; or
a time period beginning at a time of a first trigger event responsive to which the terminal device enters the RRC idle state or the RRC inactive state and ending at a time of a second trigger event related to the sending of the indication of the result of the measurement to the first base station; or
a time period beginning at a start of the performing of the measurement and ending at a time of a or the second trigger event related to the sending of the indication of the result of the measurement to the first base station; or
a time period beginning at a completion of the performing of the measurement and ending at a time of a or the second trigger event related to the sending of the indication of the result of the measurement to the first base station; and
optionally, wherein the first trigger event comprises the terminal device receiving an RRC Release message or an RRC Suspend message; and
optionally, wherein the second trigger event comprises:
the terminal device sending a random-access MSG1 message; or
the terminal device receiving a request for an early measurement reporting (EMR) report.

4. The terminal device of any of claim 1 to claim 3, wherein the evaluation process is performed responsive to the occurrence of an evaluation trigger event.

5. The terminal device of claim 4, wherein the evaluation trigger event comprises the sending, by the terminal device, of a random-access MSG1 message; or wherein the evaluation trigger event relates to activation of a secondary cell for the terminal device.

6. The terminal device of claim 4 or claim 5, wherein the instructions, when executed by the at least one processor, cause the terminal device to perform operations comprising:
receiving an instruction to configure the terminal device to perform the evaluation process, the instruction including an indication of the evaluation trigger event; and
responsive to receiving the instruction, configuring the terminal device to perform the evaluation process in response to the evaluation trigger event.

7. The terminal device of any of claim 1 to claim 6, wherein the first condition relates to:
a speed of movement of the terminal device;
whether the terminal device has low mobility; or
whether the terminal device is stationary.

8. The terminal device of any of claim 1 to claim 7, wherein the second condition relates to:
a proximity of the terminal device to an edge of the cell of the network.

9. A method performed by a terminal device, the method comprising:
performing a measurement related to a first base station while the terminal device is configured in a radio resource control (RRC) idle state or in an RRC inactive state;
performing, at least when the terminal device is not configured to determine whether the measurement satisfies a timing condition, an evaluation process comprising determining whether, at a given point in time or during a given time period, at least two conditions are both met, the at least two conditions comprising:
a first condition relating to a mobility of the terminal device; and
a second condition relating to a location of the terminal device with respect to a cell provided by the first base station; and
sending, to a second base station, an indication of a result of the measurement and an indication of whether the at least two conditions are both met.

10. The method of claim 9, comprising:
receiving an instruction to configure the terminal device to perform the evaluation process, the instruction including an indication of the given point in time or the given time period; and
responsive to receiving the instruction, configuring the terminal device to perform the evaluation process.

11. The method of claim 9 or claim 10, comprising:
receiving an instruction to configure the terminal device to perform the evaluation process, the instruction including an indication of an evaluation trigger event responsive to which the terminal device is to perform the evaluation process; and
responsive to receiving the instruction, configuring the terminal device to perform the evaluation process in response to the evaluation trigger event.

12. A network device comprising:
at least one processor; and
at least one memory storing instructions that, when executed by the at least one processor, cause the network device to perform operations comprising:
receiving, from a terminal device:
an indication of a result of a measurement related to a first base station, the measurement having been performed when the terminal device is in a radio resource control (RRC) idle state or in an RRC inactive state; and
an indication of a result of an evaluation process;
wherein the result of the evaluation process is indicative of whether, at a given point in time or during a given time period, at least two conditions are both met, the at least two conditions comprising:
a first condition relating to a mobility of the terminal device; and
a second condition relating to a location of the terminal device with respect to a cell provided by the first base station.

13. A method performed by a network device, the method comprising:
receiving, from a terminal device:
an indication of a result of a measurement related to a first base station, the measurement having been performed when the terminal device is in a radio resource control (RRC) idle state or in an RRC inactive state; and
an indication of a result of an evaluation process;
wherein the result of the evaluation process is indicative of whether, at a given point in time or during a given time period, at least two conditions are both met, the at least two conditions comprising:
a first condition relating to a mobility of the terminal device; and
a second condition relating to a location of the terminal device with respect to a cell provided by the first base station.

14. The method of claim 13, comprising:
determining, based on the indication of the result of the evaluation process, an indication of a reliability or validity of the indication of the result of the measurement; and, optionally:
wherein the measurement relates to a cell which is a candidate for use as a secondary cell for the terminal device, and wherein the method comprises:
determining, based on the indication of the reliability or validity of the indication of the result of the measurement, a parameter relating to activation of the secondary cell for the terminal device.

15. A computer-readable medium comprising instructions which, when executed by at least one processor of a terminal device, cause the terminal device to perform at least the method of any of claim 9 to claim 11.
